# EUROPÄISCHE PATENTSCHRIFT

(11) **EP 1 836 827 B1**
(45) Veröffentlichungstag und Bekanntmachung des Hinweises auf die Patenterteilung: **25.11.2009**
(21) Anmeldenummer: 05825340.2
(22) Anmeldetag: 07.12.2005
(51) Int. Cl.: H04L 29/06, H04M 7/00

(54) **VERFAHREN ZUR ÜBERMITTLUNG VON KOMMUNIKATIONSDATEN**
Method for the transmission of communication data
Procédé de transmission de données de communication

(30) Priorität: 11.01.2005 DE 102005001257
(43) Veröffentlichungstag der Anmeldung: 26.09.2007
(73) Patentinhaber: SIEMENS AKTIENGESELLSCHAFT, 80333 München (DE)
(72) Erfinder: DUSCH, Edith, A-2112 Würnitz (AT); KENNEDY, Stephan, 86949 Windach (DE); PELLERT, Martin, 81477 München (DE)
(74) Vertreter: Fritzsche, Thomas
(86) Internationale Anmeldenummer: PCT/EP2005/056566
(87) Internationale Veröffentlichungsnummer: WO 2006/074844

(56) Entgegenhaltungen:
- US-A1- 2002 141 386
- ROSENBERG DYNAMICSOFT H SALAMA CISCO SYSTEMS M SQUIRE HATTERAS NETWORKS J: "Telephony Routing over IP (TRIP); rfc3219.txt" IETF STANDARD, INTERNET ENGINEERING TASK FORCE, IETF, CH, Januar 2002 (2002-01), XP015008998 ISSN: 0000-0003

## Beschreibung

Die Erfindung betrifft ein Verfahren zum Aufbau einer Kommunikationsverbindung nach dem Obersatz des Patentanspruchs 1.

Bei zeitgemäßen Kommunikationssystemen ist bekannt, Nutzdaten, z.B. zur Sprach- oder Videokommunikation, sowohl mittels einer so genannten leitungsvermittelten Technik als auch über paketorientierte Netzwerke zu übermitteln. Kommunikationssysteme, welche sowohl eine paketorientierte als auch eine leitungsvermittelnde übertragungstechnik ermöglichen, werden auch als »konvergente« Kommunikationssysteme bezeichnet.

In Anlehnung an das häufig zum Einsatz kommende »Internet Protocol«, abkürzend auch mit IP bezeichnet, wird im folgenden auf eine paketorientierte Übertragung von Nutzdaten, beispielsweise Sprachdaten, auch der Begriff »Voice over IP«, abkürzend VoIP verwendet. Für die VoIP-Kommunikation ist dabei der ITU-T-Standard (International Telecommunication Union - Telecommunications Standardization Sector) H.323 bzw. das von der Arbeitsgruppe IETF (Internet Engineering Task Force) entwickelte Protokoll SIP (Session Initiation Protocol) weit verbreitet.

Ein konvergentes Kommunikationssystem umfasst üblicherweise mindestens eine Kommunikationseinrichtung, mit welcher durch entsprechende Anschlussbaugruppen eine Anbindung sowohl von VoIP-Kommunikationsendgeräten als auch von »klassischen«, d.h. nach dem leitungsvermittelnden Prinzip arbeitenden Kommunikationsendgeräten ermöglicht ist.

Zur Konvertierung zwischen leitungsorientierten und paketorientierten Übertragungstechniken werden so genannte Gateways verwendet. Ein Gateway nimmt dabei eine Konversion zwischen paketorientierten und leitungsorientierten Übertragungstechniken vor und ist häufig zwischen einem paketorientiertem Netzwerk und einer nach einem leitungsvermittelnden Verfahren arbeitenden Kommunikationseinrichtung angeordnet. Die Konversion betrifft dabei sowohl Signalisierungsdaten als auch Nutzdaten, insbesondere also Sprach-, Videodaten oder auch so genannte nicht-sprachliche Nutzdaten wie beispielsweise Tonsignale von Fernkopieeinheiten oder Modems. Die Nutzdaten werden in der Fachwelt auch »Payload« genannt. Die Gateways enthalten Mittel zur wechselseitigen Umsetzung von Datenströmen in geeignete Datenpakete. Zur Umsetzung von Nutzdaten in digitale Informationen sind z.B. digitale Signalprozessoren vorgesehen.

Ein in konvergenten Kommunikationsnetzwerken auftretendes Problem ist eine Häufung mehrer Konversionen zwischen paketorientierten und leitungsorientierten Übertragungstechniken, welche häufig negative Auswirkungen auf die Sprachqualität an den an der Kommunikation beteiligten Kommunikationseinheiten bewirkt.

Ein Verfahren für eine direkte Medienkopplung wurde in der am 30.06.2005 beim Deutschen Patent- und Markenamt veröffentlichten Anmeldung DE 10 354 974 mit dem Titel »Verfahren zur Übermittlung von Kommunikationsdaten in einem Kommunikationssystem« vorgeschlagen, das sich durch ein Übermittlung von Kommunikationsdaten über eine direkte Medienkopplung (Direct Media Connection) ohne Beteiligung mehrerer Knoteneinheiten (Gateways) und damit notwendiger Konvertierungen auszeichnet.

Das genannte Verfahren einer direkten Medienkopplung zur Übermittlung von Kommunikationsdaten in einem Kommunikationssystem zwischen einer rufenden ersten Kommunikationseinheit und einer gerufenen zweiten Kommunikationseinheit sieht zunächst einen Aufbau einer primären Verbindung bzw. »Master-Verbindung« vor. Diese primäre Verbindung wird ausgehend von der ersten Kommunikationseinheit über mindestens eine Knoteneinheit zur zweiten Kommunikationseinheit aufgebaut, wobei in den für den Aufbau der primären Verbindung verwendeten Nachrichtenadressierungsdaten der am Aufbau der primären Verbindung beteiligten Kommunikationseinheiten und Knoteneinheiten Adressierungsdaten enthalten sind und mit Steuernachrichten zum Aufbau der primären Verbindung übermittelt werden. Die primäre Verbindung wird von der ersten Kommunikationseinheit über mindestens eine Knoteneinheit zur zweiten Kommunikationseinheit aufgebaut, wobei die Anzahl der für die primäre Verbindung enthaltenen Knoteneinheiten von der Netzwerkstruktur abhängig ist. Mithilfe der übermittelten Adressierungsdaten der am Aufbau der primären Verbindung beteiligten Kommunikationseinheit wird ein Einstiegsknoten registriert. Der Einstiegsknoten ist definiert durch die entlang der primären Verbindung erste notwendige Konvertierung von leitungsorientierten zu paketorientierten Kommunikationsdaten. Der Ausstiegsknoten ist definiert durch die entlang der primären Verbindung letzte notwendige Konvertierung von paketorientierten zu leitungsorientierten Kommunikationsdaten.

Der Einstiegsknoten ist dabei die erste Einheit mit einem gültigen Adressierungsdatum, d.h. die ein gültiges Adressierungsdatum aufweisende erste Kommunikationseinheit selbst oder die erste Knoteneinheit mit einem gültigen Adressierungsdatum. Mit anderen Worten wird für den Fall, dass die erste Kommunikationseinheit ein gültiges Adressierungsdatum aufweist, diese als Einstiegsknoten registriert. Ein gültiges Adressierungsdatum ist dabei beispielsweise die Vorsehung einer Kommunikationseinheit bzw. Knoteneinheit mit einer Netzwerkadresse, unter der die Kommunikationseinheit bzw. Knoteneinheit von einem beispielsweise paketorientierten Netzwerk angesprochen werden kann. In analoger Weise wird eine entlang der primären Verbindung angeordnete letzte Knoteneinheit mit einem gültigen Adressierungsdatum bzw. die zweite Kommunikationseinheit selbst sofern sie ein gültiges Adressierungsdatum aufweist als Ausstiegsknoten registriert. Beide, der Einstiegsknoten als auch der Ausstiegsknoten bilden die Endknoten einer auszubildenden direkten Medienkopplung. Als letzter Verfahrensschritt ist die Ausbildung einer sekundären Verbindung bzw. direkten Medienkopplung (»Direct Media Connection«, DMC) zwischen den vormals registrierten Endknoten, d.h. Einstiegsknoten und Ausstiegsknoten, über ein im Kommunikationssystem verfügbares Netzwerk vorgesehen. Die Kommunikationsdaten insbesondere Nutzdaten werden daraufhin über die sekundäre Verbindung übermittelt. Bei einer Wahl einer paketorientierten Übertragungsweise für die sekundäre Verbindung sind mehrfache Konvertierungen längs der sekundären Verbindung damit vermeidbar. Die paketorientierte Übertragungsweise wird ohne weitere Konvertierung längs der sekundären Verbindung bis zum Ausstiegsknoten beibehalten.

Das Verfahren zur direkten Medienkopplung ist also kurz gesagt dadurch charakterisiert, dass ab dem Zeitpunkt der Annahme einer Verbindung durch die gerufene Kommunikationseinheit eine Direktverbindung über ein möglichst großes Teilstück eines gemeinsamen paketorientierten Netzwerks zwischen zwei Endpunkten ausgebildet wird. Bei einer Übermittlung von Kommunikationsdaten, beispielsweise in Form von Sprache, ist durch Anwendung des vorgeschlagenen Verfahrens eine wesentliche Verbesserung der Sprachqualität sowohl an der rufenden ersten als auch an der gerufenen zweiten Kommunikationseinheit feststellbar.

Das oben genannte Verfahren zur direkten Medienkopplung erweist sich indes als problematisch für Fälle, bei dem die an einer Kommunikationsverbindung beteiligten Kommunikationseinheiten zur Übertragung von Fernkopie- oder Modemtönen vorgesehen sind und hierzu beispielsweise als Fernkopierer bzw. Fax, als Modem oder allgemein als eine zur Übertragung nichtsprachlicher Nutzdaten vorgesehene Einheit vorliegen.
Im Fall einer Ausbildung einer Kommunikationsverbindung zur Übertragung von Fernkopiedaten, werden normalerweise schon vor der Ende-zu-Ende-Durchschaltung der Kommunikationsverbindung Daten im Nutzkanal übertragen, mit denen vor der Übertragung der eigentlichen Bilddaten der auszuführenden Fernkopie eine Absprache zur Einleitung der Datenverbindung zwischen den Kommunikationseinheiten stattfindet. Diese Nutzdaten zur Absprache einer Einleitung der Datenverbindung werden z.B. in Form von Signaltönen ausgetauscht. Für Fernkopiereinheiten ist dabei ein so genanntes »CNG-Signal« bzw. »Calling Tone« zur Anforderung eines Wechsels in den Übertragungsmodus bekannt. Ein weiteres Signal auf Basis mindestens eines Signaltons ist das CED-Signal, »Called Terminal Identification«. CED-Signale wird von gerufenen Fernkopiereinheiten auf dem Nutzdatenkanal gesendet, um anzuzeigen, dass die Fernkopiereinheit sich im Übertragungsmodus befindet.

Diese bereits vor der endgültigen Ende-zu-Ende-Ausbildung der Verbindung gesendeten Nutzsignale in Form von Signaltönen werden in Knoteneinheiten bzw. Gateways für eine Beaurteilung der Übertragungsparameter herangezogen, um die nicht-sprachliche Kommunikationsverbindung in den paketorientierten Abschnitten des Kommunikationsnetzwerks zu optimieren. Eine mögliche Optimierung ist beispielsweise ein Umstieg von hoch komprimierenden Nutzdaten-Kodierverfahren auf niedrigkomprimierende Kodierverfahren. Gängige Komprimierungsverfahren sind auf Sprachnutzdaten optimiert. Da das Frequenzspektrum von nicht-sprachlichen Nutzdaten weiter ist als bei Sprachdaten, können durch hoch-komprimierende Kodierverfahren nicht-sprachliche Nutzdaten verloren gehen. Eine im Anschluss auf dem Wege der direkten Medienkopplung vorgesehener Aufbau eines DMC-Übertragungswegs (Direct Media Connection) führt hingegen zu einer Beeinträchtigung oder sogar zum Scheitern der Übertragung, da bei diesem DMC-Übertragungsweg die in den Knoteneinheiten vorgesehene Beurteilung der Übertragungsparameter zur Optimierung der nicht-sprachlichen Kommunikationsverbindung in den paketorientierten Abschnitten des Kommunikationsnetzwerks nicht berücksichtigt wird. Diese Beeinträchtigung führt bei gegenwärtigen Kommunikationssystemen und/oder -netzwerken dazu, dass Verfahren für eine direkte Medienkopplung für nicht-sprachliche Kommunikationsverbindungen nicht einsetzbar sind.

Eine mögliche Alternative zur Behebung der Probleme einer direkten Medienkopplung wäre ein Verzicht auf diese Direktkopplung. Dies hieße, die Kommunikationsverbindung im heterogenen Netzwerk über mehrere Konteneinheiten bzw. Gateways ausschließlich auf dem Wege der primären Verbindung (vgl. oben) aufzubauen. Jedoch ist auch eine über mehrere Knoteneinheiten verlaufende ausschließlich primäre Verbindung für nicht-sprachliche Kommunikationsverbindungen nicht einsetzbar, da eine mehrfache Konversion mit einem damit verbundenen Qualitätsverlust verbunden ist. Eine fehlerfreie nicht-sprachliche Kommunikationsverbindung über mehr als zwei Konversionsvorgänge zwischen leitungs- und paketorientierter Übertragungsweise ist aufgrund dieser Qualitätsverluste nicht zu betreiben.

Eine dritte Alternative zur Ausbildung einer Kommunikationsverbindung in einem heterogenen Kommunikationssystem sieht vor, dass eine im Fall einer aufzubauenden nicht-sprachlichen Verbindung diese über eine leitungsorientierte Übertragungsweise bzw. TDM (Time Division Multiplex) aufgebaut wird. Diese Maßnahme stellt jedoch einen technischen Rückfall in eine Übertragungsweise dar, welche mit der paketorientierten VoIP-Telephonie gerade abgelöst werden sollte. Zudem erfordert die leitungsorientierte Übertragungsweise eine feste sternförmig konzentrierte Leitungsführung zwischen den jeweiligen Endpunkten bzw. Knoteneinheiten, welche aufgrund der paketorientierten Architektur an den benötigten Stellen meist nicht vorhanden ist, deren Belegung aber zumindest mit zusätzlichen Kosten verbunden ist.

Aufgabe der Erfindung ist es, ein Verfahren für eine Kommunikationsverbindung in einem nach dem Prinzip der direkten Medienkopplung arbeitenden Kommunikationssystem anzugeben, das die Nachteile des Standes der Technik vermeidet.

Eine Lösung der Aufgabe erfolgt hinsichtlich ihres Verfahrensaspekts durch ein Verfahren mit den Merkmalen des Patentanspruchs 1.

Ein wesentlicher Vorteil des erfindungsgemäßen Verfahrens ist durch die frühzeitige Optimierung der direkten Medienkopplungsverbindung zu sehen, deren Übertragungsparameter schon vor deren Aufbau eingestellt werden. Die an der direkten Medienkopplungsverbindung beteiligten Knoteneinheiten, d.h. Endknoten, werden bezüglich Ihrer Übertragungsparameter frühzeitig aufeinander abgestimmt, was die Qualität der direkten Medienkopplungsverbindung entscheidend verbessert. Da eine Umstellung der Übertragungsparameter bereits vor Aufbau der direkten Medienkopplungsverbindung erfolgt, entstehen keine durch eine Umstellung der Übertragungsparameter nach dem erfolgten Aufbau der direkten Medienkopplungsverbindung unausweichlichen Lücken in der Nutzdatenübertragung.

Ein weiterer Vorteil ist durch die Beurteilung der Art der Nutzdatenverbindungen gegeben. Werden nicht-sprachliche Signaltöne in einer Knoteneinheit detektiert, ermöglicht es das erfindungsgemäße Verfahren, die Übertragungsparameter der direkten Medienkopplungsverbindung, z.B. Codec-Einstellwerte, gezielt auf diese nicht-sprachlichen Signaltöne einzustellen.

Vorteilhafte Weiterbildungen der Erfindung sind in den Unteransprüchen angegeben.

Ein Ausführungsbeispiel mit weiteren Vorteilen und Ausgestaltungen der Erfindung wird im folgenden anhand der Zeichnung näher erläutert.

Dabei zeigen:
- Fig. 1:: ein Strukturbild zur schematischen Darstellung ei- ner Kommunikationsbeziehung von Endgeräten in einem heterogenen Kommunikationssystem unter Verwendung einer zeitschlitzorientierten Verbindung; und;
- Fig. 2:: ein Strukturbild zur schematischen Darstellung ei- ner Kommunikationsbeziehung von Endgeräten in einem heterogenen Kommunikationssystem unter Verwendung einer direkten Medienkopplung.

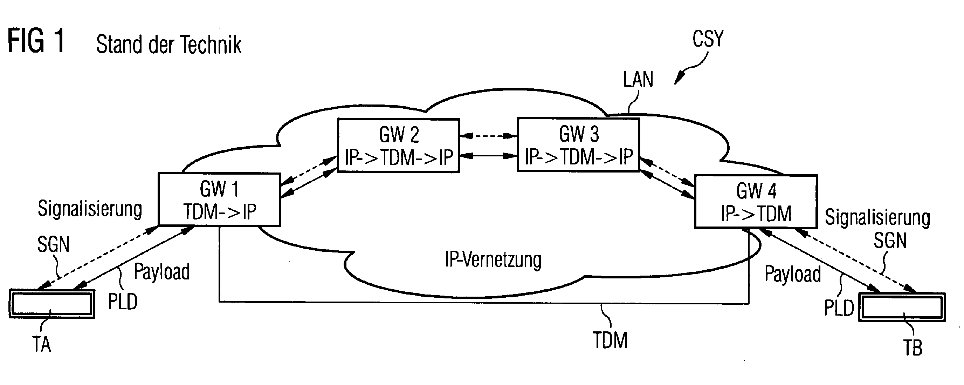

In Fig. 1 ist ein im derzeitigen Stand der Technik bekanntes Kommunikationssystem CSY, bestehend aus vier mit einem paketorientierten Netzwerk LAN verbundenen Knoteneinheiten GW1,GW2,GW3,GW4 dargestellt. Das paketorientierte Netzwerk LAN ist als lokales Netzwerk, Intranet, Firmennetzwerk, als Domäne eines größeren Netzwerkverbundes oder auch Teil eines weltweiten Datennetzwerkes wie beispielsweise dem so genannten World Wide Web, WWW, ausgestaltet.

An eine erste Knoteneinheit GW1 ist ein erstes Endgerät TA, an eine vierte Knoteneinheit GW4 ist ein zweites Endgerät TB angeschlossen. Die Anschlussweise des ersten bzw. zweiten Endgeräts TA,TB ist zeitschlitzorientiert (TDM, Time Division Multiplex) und mit einer z.B. im ISDN (Integrated Services Digital Network) bekannten Trennung in Signalisierungsdaten SGN und Nutzdaten PLD ausgeführt. In der Zeichnung sind Signalisierungsdaten SGN mit einer strichlierten Linie, Nutzdaten PLD mit einer durchgezogenen Linie dargestellt. Diese Darstellung gilt auch für den mit jeweiligen den paketorientierten Datenaustausch zwischen den Knoteneinheiten GW1, GW2, GW3, GW4 symbolisierenden Linien, welche aus Übersichtsgründen jedoch nicht mit dem entsprechenden Kurzzeichen für die Signalisierungsdaten SGN bzw. Nutzdaten PLD versehen sind.

In der ersten Knoteneinheit GW1 wird eine Konvertierung von zeitschlitzorientiert übertragenen Signalisierungs- und Nutzdaten SGN,PLD in eine über das paketorientierte Netzwerk LAN transportierbare Übertragungsweise der Signalisierungs- und Nutzdaten SGN,PLD vorgenommen. Entsprechend wird in der vierte Knoteneinheit GW4 eine Konvertierung von paketorientiert übertragenen Signalisierungs- und Nutzdaten SGN,PLD in eine zeitschlitzorientierte Übertragungsweise der Signalisierungs- und Nutzdaten SGN,PLD vorgenommen, welche zwischen der vierten Knoteneinheit und dem zweiten Endgerät TB ausgetauscht werden.

Im Ausführungsbeispiel wird ein heterogenes Kommunikationssystem CSY angenommen, bei dem die Knoteneinheiten GW1, GW2, GW3, GW4 oder mit den Knoteneinheiten GW1, GW2, GW3, GW4 verbundene nicht dargestellte Kommunikationseinrichtungen intern nach einem zeitschlitzorientiertem Vermittlungsprinzip arbeiten und demgemäß über ein entsprechendes jeweiliges Koppelfeld verfügen. Eine Parallelität von paketorientierten und zeitschlitzorientierten Vermittlungs- und Übertragungsweisen ist jedoch auch für viele andere Fälle denkbar, von denen die hier dargestellte Konvertierung aufgrund eines Koppelfelds exemplarisch herausgegriffen wird.

Im Folgenden wird davon ausgegangen, dass die übertragenen Nutzdaten in einem hier betrachteten Zeitraum nichtsprachlicher Art sind, die beteiligten Endgeräte TA,TB also z.B. zur Übertragung von Fernkopie- oder Modemtönen betrieben werden und beispielsweise als Fernkopierer bzw. Fax, als Modem oder allgemein als eine zur zumindest zeitweiligen Übertragung nichtsprachlicher Nutzdaten PLD vorgesehene Einheit ausgestaltet sind. Die Beschreibung eines Ausführungsbeispiels des erfindungsgemäßen Verfahrens erfolgt dabei exemplarisch anhand einer Faxübertragung.

Das im derzeitigen Stand der Technik bekannte Kommunikationssystem CSY zeigt eine zeitschlitzorientierte Verbindung TDM, welche im Fall einer Übertragung nichtsprachlicher Nutzdaten PLD verwendet wird, da wie in der Einleitung erwähnt mehr als zwei IP/TDM-Übergänge für nichtsprachlicher Nutzdaten zu Fehlern oder sogar zu einem Ausfall einer erfolgreichen Kommunikationsverbindung führen.

Vom ersten Endgerät TA gesendete Signaltöne führen in der ersten Knoteneinheit GW1 zu einer Optimierung der Übertragungsparameter, sobald ein Signalton sicher erkannt wurde. Unter einer Umstellung von Übertragungsparameter wird z.B. eine Wahl eines geeigneten Codecs verstanden, Einzelheiten siehe unten. Erst nach dieser Optimierung durch eine Erkennung eines Signaltons oder nicht-sprachlichen Nutzdaten PLD anderer Art und Umstellung der Übertragungsparameter ist die folgende zweite Knoteneinheit GW2 längs der aufzubauenden Kommunikationsverbindung ihrerseits in der Lage, einen Signalton zu detektieren und ebenfalls die Übertragungsparameter zu optimieren. Anschließend wird eine Optimierung in der dritten Knoteneinheit GW3, gefolgt von einer Optimierung in der vierten Knoteneinheit GW4 durchgeführt.

Diese kettenweise Optimierung behindert die aufzubauende Kommunikationsverbindung in einer Weise, die oftmals zu einem Scheitern führt. Ein weiteres Hindernis stellen Jitterbuffer dar, die bei der Konvertierungen zwischen paketorientierter und zeitschlitzorientierter Übertragungsweise benötigt werden. Diese verursachen zeitliche Verzögerungen im Nutzdatenaustausch, die eine für eine nicht-sprachliche Datenkommunikation benötigte Synchronisierung der Endgeräte TA,TB behindern oder unmöglich machen.

Daher wird im Stand der Technik als Übertragungsmedium für nicht-sprachliche Kommunikationsverbindungen zusätzlich zum paketorientierten Netzwerk LAN eine zeitschlitzorientierte Vernetzung TDM ausgewählter Knoteneinheiten GW1, GW4 im Kommunikationssystem CSY vorgehalten, welche mit hohen Zusatzkosten verbunden ist.

Im folgenden wird unter weiterer Bezugnahme auf die Funktionseinheiten der Fig. 1 eine nächste Ausführungsform näher erläutert.

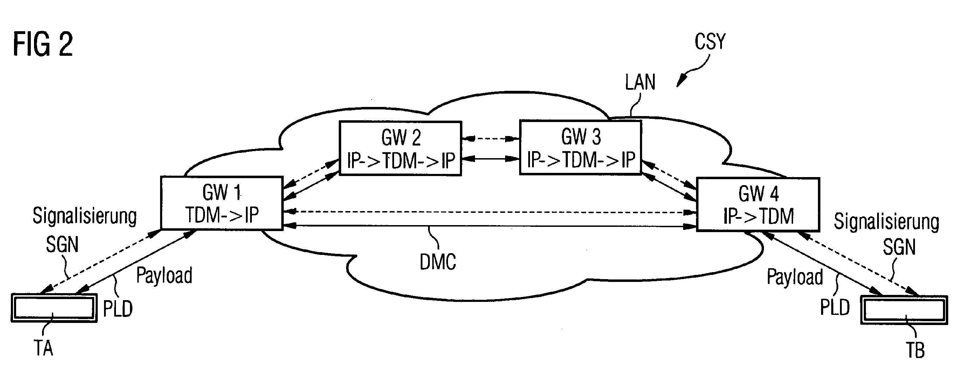

FIG 2 zeigt eine Kommunikation von Endgeräten TA,TB unter Verwendung einer direkten Medienkopplung DMC.

Es wird zuerst davon ausgegangen, dass zwischen den Endgeräten TA,TB eine bestehende Kommunikationsverbindung auf sprachlicher Basis unterhalten wird.

Nebenbei bemerkt, trifft dies auf die meisten der hier betrachteten Endgeräte zu. Selbst Fernkopieendgeräte und Modems melden die Kommunikationsverbindung durch Signalisierung mit einer Dienstanforderung »Sprache« an, so dass zunächst nicht ersichtlich ist, ob tatsächlich sprachliche oder - in unserem Sinne - »nicht-sprachliche« Informationen ausgetauscht werden soll. Eine Dienstanforderung »Sprache« würde bei Verwendung beispielsweise eines Fernkopieendgeräts dazu führen, dass eine Sprachnutzdatenverbindung nicht optimal ist.

Während des bereits stattgefundenen Aufbaus der Kommunikationsverbindung wurde eine primäre Verbindung ausgehend vom rufenden ersten Endgerät TA die Knoteneinheiten GW1, GW2, GW3, GW4 in ihrer numerischen Reihenfolge zum gerufenen zweiten Endgerät aufgebaut. Mithilfe von übermittelten Adressierungsdaten der am Aufbau der primären Verbindung beteiligten Knoteneinheiten GW1, GW2, GW3, GW4 wurde die erste Knoteneinheit GW1 als Einstiegsknoten und die vierte Knoteneinheit GW4 als Ausstiegsknoten registriert. Die direkte Medienkopplung DMC bzw. vgl. oben sekundäre Verbindung DMC wurde daraufhin zwischen den als Einstiegs- und Ausstiegsknoten vermerkten Knoteneinheiten GW4,GW1 aufgebaut. Die Kommunikationsdaten insbesondere Nutzdaten werden daraufhin über die sekundäre Verbindung DMC übermittelt.

Aus im den folgenden erläuterten Gründen wird in derzeitigen Kommunikationssystemen CSY von einem Aufbau einer direkte Medienkopplung DMC im Fall von nicht-sprachlichen Nutzdaten PLD abgesehen. Wird eine direkte Medienkopplung DMC aufgebaut, bleibt im heutigen Stand der Technik unberücksichtigt, ob bereits Signaltöne oder andere nicht-sprachliche Nutzdaten PLD in einem der beteiligten Knoteneinheiten GW1, GW2, GW3, GW4 erkannt wurden. Dies bedeutet, dass in jedem Fall zunächst eine bezüglich der Übertragungsparameter, beispielsweise Codecs auf Sprache optimierte direkte Medienkopplung DMC aufgebaut wird. Sendet während eines Verbindungsaufbaus das in einem Fernkopiemodus betriebene gerufene zweite Endgerät TB einen CED-Signalisierungston (»Called Terminal Identification«) in Antwort auf einen CNG-Signalisierungston bzw. »Calling Tone« des rufenden ersten Endgeräts TA, muss eine im Aufbau befindliche oder bereits aufgebaute direkte Medienkopplung DMC auf einen Fernkopiemodus oder allgemeiner auf eine nicht-sprachliche Nutzdatenübertragung PLD optimiert und z.B. auf einen anderen Codec oder andere Übertragungsparameter umgestellt werden. Durch eine solche »nachgelagerte« Umstellung kommt es zu kurzzeitigen Übertragungsunterbrechungen, d.h. zu einer Unterbrechung des Nutzdatenstroms PLD. Dadurch gehen u.U. wertvolle Nutzdaten verloren, welche dem anderen an der Verbindung beteiligten Knoten oder dem rufenden Endgerät TA nützlich sein könnten. Außerdem bleibt der CNG-Ton bei der Optimierung unberücksichtigt, weil dieser typischerweise auf der primären Verbindung erkannt wurde. Gemäß bekannter Faxprotokolle wird jedoch das CNG-Signal des rufenden Endgeräts TA nach dem CED-Signal nicht wiederholt, d.h. diese Information ist der im Zuge des Aufbaus der direkten Medienkopplung DMC verloren gegangen. Die zwischen den Endgeräten TA, TB aufgebaute Kommunikationsverbindung kommt im schlimmsten Fall nicht zustande, ist aber zumindest nicht optimal auf die Fernkopie-Übertragung eingestellt.

Falls eine direkte Medienkopplung DMC aufgebaut werden konnte, sind Ihre Übertragungsparameter also für sprachliche Nutzdaten PLD eingestellt. Sendet unter diesen Umständen nun das gerufene Endgerät TB keine weiteren, einer Absprache der Kommunikationsverbindung dienenden Signaltöne, sondern beginnt bereits mit der eigentlichen Übertragung der Fernkopiedaten, ist eine erfolgreiche Übertragung der Fernkopiedaten äußerst unwahrscheinlich, da diese Fernkopiedaten oft nicht über komprimierende Codecs oder mit anderen für eine Sprachverbindung optimierten Übertragungsparameter übertragen werden können.

Die erfindungsgemäßen Mittel sehen nun vor, dass in den Knoteneinheiten GW1, GW2, GW3, GW4 die Art der aufgelaufenen Nutzdaten PLD gespeichert wird. Die vorgehaltenen Informationen über die Art der Nutzdaten PLD werden dann beim Aufbau der direkten Medienkopplung DMC ausgewertet und berücksichtigt. Typischerweise handelt es sich bei nicht-sprachlichen Nutzdaten PLD um Signaltöne, welche die Endgeräte miteinander austauschen, um den Übertragungsmodus und die Fähigkeiten des andern zu ermitteln bzw. auszuhandeln. Durch die Berücksichtigung der vorgehaltenen Informationen für den Aufbau der direkten Medienkopplung DMC wird erreicht, dass der direkten Medienkopplung DMC die selben Informationen über die Art der Nutzdaten zur Verfügung stehen wir der primären Verbindung. Dies ist vor allem aus dem Grund von Wichtigkeit, da während einer Initialisierungsphase Nutzdaten PLD ausgetauscht werden, für welche in den entsprechenden Protokollen zur Absprache des Kommunikationsverbindungsaufbaus keine Wiederholung durch das rufende bzw. das gerufene Endgerät TA,TB vorgesehen ist.

In Anwendung der erfindungsgemäßen Mittel erfolgt der Kommunikationsaufbau mit einer direkten Medienkopplung DMC auf die nachfolgend dargestellte Weise. Das rufende Endgerät TA sendet einen CNG-Signalton während des Verbindungsaufbaus über die vier an der Verbindung beteiligten Knoteneinheiten GW1,GW2,GW3,GW4. Die erste Knoteneinheit detektiert diesen Signalton und stellt das Kodierverfahren für die über das paketorientierte Netzwerk LAN verlaufende Kommunikationsstrecke zum nächsten zweiten Gateway GW2 von einem beispielsweise zuvor eingestellten Codec G.729 auf einen niedriger komprimierenden Codec G.711 um. Der zweiten Knoteneinheit GW2 wird die Art der Nutzdatenverbindung PLD, hier also eine nicht-sprachliche Nutzdatenverbindung PLD, und die erfolgte Umstellung des Codecs signalisiert.

Für den Fall, dass nun das gerufene zweite Endgerät TB bereits die Verbindung annimmt die Verbindungsaufbausignalisierung unterliegt nicht den Tonerkennungsverzögerungen und kommt daher schnell zum Endgerät durch wird die direkte Medienkopplung DMC durch die dem gerufenen Endgerät TB nächstliegende vierten Knoteneinheit GW4 aufgebaut. Diese vierte Knoteneinheit GW4 hat zu diesem noch keinen CNG-Ton vom rufenden Endgerät TA erhalten. Die dem rufenden Endgerät TA nächstliegende erste Knoteneinheit GW1 wendet nun eine aus dem detektierten CNG-Ton gewonnene Übertragungsparameteroptimierung auf die direkte Medienkopplung DMC an und signalisiert diese Optimierung dem Endpunkt der direkten Medienkopplung DMC, mithin der vierten Knoteneinheit GW4. Eine solche Signalisierung erfolgt beispielsweise über eine H.323-Meldung. Die vierte Knoteneinheit GW4 optimiert ebenfalls ihre Einstellung der Übertragungsparameter, übernimmt also beispielsweise die per H.323-Meldung empfangenen Übertragungsparameter der ersten Knoteneinheit GW1. Eine typischerweise mit einem Codecwechsel verbundene Unterbrechung des Nutzdatenstroms wird auf diese Weise vermieden, da mit den erfindungsgemäßen mitteln ein Codecwechsel bereits beim Aufbau der direkten Medienkopplung DMC oder unmittelbar danach statt findet, und zwar üblicherweise, bevor weitere folgende Signaltöne von den Endgeräten TA,TB gesendet werden. Die für den Austausch von Fernkopiedaten vorgesehnen Nutzdaten PLD der Endgeräte TA,TB können nun reibungslos über die direkte Medienkopplung DMC ausgetauscht werden.

Sollte eine Nutzdateninformation über die längs der Knoteneinheiten GW1, GW2, GW3, GW4 in der vierten Knoteneinheit GW4 oder auch in Rückrichtung im GW1 ankommen, während die direkte Medienkopplung DMC aufgebaut wird oder bereits aufgebaut ist, kann diese Nutzdateninformation mit den erfindungsgemäßen Mitteln auf der direkten Medienkopplungsverbindung DMC nachträglich gesendet werden, falls dies aufgrund von entstandenen Lücken notwendig wird. Außerdem werden durch Zeitglieder, welche die zeitlichen Abstände zwischen verschiedenen Signaltönen überwachen, zeitliche Abstände registriert und diese zusammen mit den Signaltönen auf der direkten Medienkopplungsstrecke DMC übertragen. Eine Fehlersituation kann damit aufgrund eines verlorenen oder nicht erkannten Folge-Signaltons erkannt werden. Außerdem ist auch bei einem Scheitern der direkten Medienkopplung DMC eine Übertragung der aufgelaufenen Nutzdaten PLD aus einem der Knoteneinheiten GW1, GW2, GW3, GW4 auf die ursprüngliche primäre Verbindung vorgesehen. Das kann in den Fällen sinnvoll sein, in denen die primäre Verbindung über nur wenige, insbesondere weniger als den hier dargestellten, Knoteneinheiten GW1, GW2, GW3, GW4 verläuft.

Technische Ausgestaltungen einer Berücksichtigung der vorgehaltenen Informationen für den Aufbau der direkten Medienkopplung DMC in einem jeweiligen an der direkten Medienkopplung DMC beteiligten Knoteneinheiten GW1, GW2, GW3, GW4 werden im folgenden beispielhaft erläutert:
- in einer an der Verbindung beteiligten Knoteneinheit GW1, GW2, GW3, GW4 werden die Nutzdatenübertragungseinstellungen für die direkte Medienkopplung entsprechend optimiert, z.B. die Einstellungen für Codecs, Jitterbuffer, Echounterdrückung bzw. Echokompensation usw.
- eine an der Verbindung beteiligte Knoteneinheit GW1, GW2, GW3, GW4 übermittelt der in der Kette des Kommunikationsverbindungsaufbaus folgenden Knoteneinheit GW1, GW2, GW3, GW4 Information über die Art der auszutauschenden Nutzdaten PLD und zugehörige Einstellungen. Hierzu wird beispielsweise das Kommunikationsprotokoll H.323 und das Verfahren gemäß RFC 2833 (Request for Comment) standardkonform eingesetzt.

Durch das Übertragen der aufgelaufenen Nutzdaten auf die DMC kann die Verbindung frühzeitig optimiert werden ohne die weitere Tonübertragung zu behindern. Die an der DMC beteiligten Gateways sind frühzeitig synchron was die Nutzdateneinstellungen betrifft. Nicht-sprachliche Verbindungen über die direkte Medienkopplung DMC haben die typischen Vorteile der besseren Übertragungsqualität einer direkten Medienkopplung, was gerade für typischerweise wenig tolerante nicht-sprachliche Endgeräte TA,TB, die für Leitungsvermittlung konzipiert wurden, sehr wichtig ist.

## Patentansprüche

1. Verfahren zum Aufbau einer Kommunikationsverbindung in einem zumindest teilweise paketorientierten Netzwerk (LAN) zwischen mindestens einem rufenden ersten Endgerät (TA) und mindestens einem gerufenen zweiten Endgerät (TB), das paketorientierte Netzwerk (LAN) mit einer Mehrzahl von konvertierenden Knoteneinheiten (GW1, GW2, GW3; GW4), wobei das erste Endgerät (TA) in leitungsorientierter Weise an eine erste als Einstiegsknoten bestimmte Knoteneinheit (GW1) und das zweite Endgerät (TB) in leitungsorientierter Weise an eine zweite als Aüstiegsknoten bestimmte Knoteneinheit (GW4) angeschlossen ist, umfassend folgende Schritte:
a) Aufbau einer primären Verbindung über das paketorientierte Netzwerk (LAN) ausgehend vom rufenden ersten Endgerät (TA) über den Einstiegsknoten (GW1), über mindestens eine weitere Knoteneinheit (GW2, GW3) sowie den Ausstiegsknoten (GW4) zum gerufenen zweiten Endgerät (TB), wobei der Einstiegsknoten (GW1) definiert ist durch die entlang der primären Verbindung erste Konvertierung zwischen leitungs- und paketorientierter Übertragungsweise und wobei der Ausstiegsknoten (GW4) definiert ist durch die entlang der primären Verbindung letzte Konvertierung zwischen paket- und leitungsorientierter übertragungsweise;
b) Aufbau einer direkten Medienkopplungsverbindung (DMC) über das paketorientierte Netzwerk (LAN), welche die paketorientierte übertragungsweise ohne weitere Konvertierung als Direktverbindung zwischen dem Einstiegsknoten (GW1) und dem Ausstiegsknoten (GW4) beibehält,
**dadurch gekennzeichnet,**
a1) dass während des Aufbaus der primären Verbindung in der ersten Knoteneinheit (GW1) Nutzdaten (PLD) detektiert und ausgewertet werden,
a2) dass zur Konvertierung und/oder übertragung der Nutzdaten (PLD) einstellbare Parameter der ersten Knoteneinheit (GW1) an die ausgewerteten Nutzdaten (PLD) angepasst werden,
a3) dass die Parameter an die zweite Knoteneinheit (GW4) gesendet werden,
b1) dass die direkte Medienkopplungsverbindung (DMC) mit an die ausgewerteten Nutzdaten (PLD) angepassten Parametern aufgebaut wird.

2. Verfahren nach Anspruch 1,
**dadurch gekennzeichnet,**
**dass** in den Knoteneinheiten (GW1,GW2,GW3,GW4) die Nutzdaten (PLD) gespeichert werden.

3. Verfahren nach einem der Ansprüche 1 bis 2,
**dadurch gekennzeichnet,**
**dass** die einstellbaren Parameter Konfigurationsdaten von Codecs und/oder Jitterbuffer und/oder Echounterdrückungseinheiten und/oder Echokompensationseinheiten einstellen, um eine Anpassung der Parameter an die ausgewerteten Nutzdaten vorzunehmen.

## Claims

1. Method for setting-up a communication connection in an at least partially packet-orientated network (LAN) between at least one calling first terminal (TA) and at least one called second terminal (TB), the packet-orientated network (LAN) with a plurality of conversion node units (GW1, GW2, GW3, GW4), wherein the first terminal (TA) is connected in a line-orientated manner to a first node unit (GW1) and the second terminal (TB) is connected in a line-orientated manner to a second node unit (GW4), said method comprising the following steps:
a) set-up a primary connection via the packet-orientated network (LAN) starting from the calling first terminal (TA) via entry node (GW1), via at least one additional node unit (GW2, GW3) and exit node (GW4) to the called second terminal (TB), wherein the entry node (GW1) is defined by the first conversion along the primary connection between line-orientated and packet-orientated method of transmission and wherein the exit node (GW4) is defined by the last conversion along the primary connection between packet-orientated and line-orientated method of transmission;
b) set-up a direct media connection (DMC) via the packet-orientated network (LAN), said direct media connection retaining the packet-orientated method of transmission with no further conversion as direction connection between the entry node (GW1) and the exit node (GW4),
**characterized in that**,
a1) useful data (PLD) is detected and evaluated in the first node unit (GW1) during the set-up of the primary connection,
a2) adjustable parameters of the first node unit (GW1) are adapted to the evaluated useful data (PLD) for converting and/or transmitting the useful data (PLD),
a3) the parameters are transmitted to the second node unit (GW4),
b1) the direct media connection (DMC) is set up with parameters that have been adapted to the evaluated useful data (PLD).

2. Method according to Claim 1, **characterized in that** the useful data (PLD) is stored in the node units (GW1, GW2, GW3, GW4).

3. Method according to one of Claims 1 to 3, **characterized in that** the adjustable parameters adjust configuration data of codecs and/or jitter buffers and/or echo suppression units and/or echo compensation units in order to adapt the parameters to the evaluated useful data.

## Revendications

1. Procédé de construction d'une liaison de communication dans un réseau (LAN) au moins partiellement orienté paquet entre au moins un premier terminal appelant (TA) et au moins un second terminal appelé (TB), le réseau orienté paquet (LAN) doté d'une pluralité d'unités de noeud de conversion (GW1, GW2, GW3, GW4), le premier terminal (TA) étant relié à la manière d'une liaison connectée à une première unité de noeud (GW1) définie en tant que noeud d'accès et le second terminal (TB) étant relié à la manière d'une liaison connectée à une seconde unité de noeud définie (GW4) en tant que noeud de sortie, comprenant les étapes suivantes :
a) création d'une liaison primaire sur le réseau (LAN) orienté paquet à partir du premier terminal appelant (TA) sur le noeud d'accès (GW1), sur au moins une unité de noeud supplémentaire (GW2, GW3), ainsi que le noeud de sortie (GW4) vers le second terminal appelé (TB), le noeud d'accès (GW1) étant défini par la première conversion le long de la liaison primaire entre le mode de transmission orienté paquet et le mode de transmission à la manière d'une liaison connectée, et le noeud de sortie (GW4) étant défini par la dernière conversion le long de la liaison primaire entre le mode de transmission orienté paquet et le mode de transmission à la manière d'une liaison connectée ;
b) création d'une liaison de couplage multimédia directe (DMC) sur le réseau (LAN) orienté paquet, qui maintient le mode de transmission orienté paquet sans autre conversion en tant que liaison directe entre le noeud d'accès (GW1) et le noeud de sortie (GW4),
**caractérisé en ce que**
a1) pendant la construction de la liaison primaire dans la première unité de noeud (GW1), des données utiles (PLD) sont détectées et traitées,
a2) pour la conversion et/ou la transmission des données utiles (PLD), des paramètres réglables de la première unité de noeud (GW1) sont adaptés aux données utiles traitées (PLD),
a3) les paramètres sont envoyés à la seconde unité de noeud (GW4),
b1) la liaison de couplage multimédia directe (DMC) soit créée à l'aide des paramètres adaptés aux données utiles traitées (PLD).

2. Procédé selon la revendication 1,
**caractérisé en ce**
**que** les données utiles (PLD) sont mémorisées dans les unités de noeud (GW1, GW2, GW3, GW4).

3. Procédé selon l'une quelconque des revendications 1 à 2,
**caractérisé en ce**
**que** les paramètres réglables règlent les données de configuration de codecs et/ou de la mémoire tampon d'instabilité et/ou d'unités de suppression d'échos et/ou d'unité de compensation d'échos, afin de procéder à une adaptation des paramètres aux données utiles traitées.
